# EUROPÄISCHE PATENTSCHRIFT

(11) **EP 1 588 807 B1**
(45) Veröffentlichungstag und Bekanntmachung des Hinweises auf die Patenterteilung: **04.07.2007**
(21) Anmeldenummer: 05007961.5
(22) Anmeldetag: 12.04.2005
(51) Int. Cl.: B25J 19/00

(54) **Führen flexibler Elemente entlang beweglicher Maschinenteile und Befestigen von Maschinenanbauten**
Guiding of flexible elements along movable machine parts, and fixing of accessories
Guidage d'éléments flexibles le long de parties mobiles d'une machine, et fixation d'accessoires

(30) Priorität: 23.04.2004 DE 102004019838
(43) Veröffentlichungstag der Anmeldung: 26.10.2005
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- EP-A- 1 043 530
- EP-A- 1 369 211
- DE-U1- 9 217 659
- PATENT ABSTRACTS OF JAPAN Bd. 016, Nr. 563 (M-1342), 4. Dezember 1992 (1992-12-04) -& JP 04 217487 A (MITSUBISHI ELECTRIC CORP), 7. August 1992 (1992-08-07)

## Beschreibung

Die Erfindung betrifft eine Vorrichtung zum Führen von Energieversorgungskabeln entlang Achsen eines Mehrachs-Industrieroboters.

Maschinen mit relativ zueinander beweglichen Teilen, wie Mehrachs-Industrieroboter, weisen regelmäßig extern bezüglich der Maschine angeordnete flexible Elemente auf, insbesondere Schläuche und/oder Kabel zur Energie- und Medienversorgung von durch die Maschine geführten Anbauteilen, wie Werkzeugen oder dergleichen. Beispielsweise trägt ein Mehrachs-Industrieroboter an seiner Roboterhand regelmäßig ein derartiges Werkzeug, beispielsweise eine Schweißzange, die über extern am Roboter geführte Kabel- und Schlauchverbindungen mit Energie versorgt wird.

Vorbekannte Energiezuleitungen der genannten Art sind in der Regel seitlich und nahe der Roboterstruktur angeordnet, wobei sie insbesondere zur Roboterhand hin oben auf dem Roboter entlang verlaufen. Zum Führen der Zuleitung kommen dabei an der Roboterstruktur befestigte Halteteile zum Einsatz, die regelmäßig an der Roboterstruktur festgelegte Winkelbleche und an diesen angeordnete Schellenelemente aufweisen, wobei letztere zum eigentlichen Halten und Führen der flexiblen Elemente dienen.

Eine solche Vorrichtung ist z.B. aus der DE-U-92 17 659 bekannt.

Bei der vorbekannten Vorrichtung ist insbesondere als nachteilig anzusehen, dass regelmäßig von einem Anwender der Maschine vorgesehene Maschinenanbauten, beispielsweise ein Druckluft-Steuerventil, aus befestigungstechnischen Gründen denselben Bauraum beanspruchen wie die vorstehend beschriebenen, herkömmlichen Energiezuleitungen. Es kommt also zu einem räumlichen Konflikt, der üblicherweise kostenintensive und konstruktiv komplexe Individuallösungen erforderlich macht, die regelmäßig mit einem ungünstigen räumlichen Verlauf der genannten flexiblen Elemente einher gehen.

Der Erfindung liegt die Aufgabe zugrunde, unter Vermeidung der vorstehend aufgeführten Nachteile eine Vorrichtung der eingangs genannten Art dahingehend weiter zu entwickeln, dass keine räumlichen Behinderungen beim zusätzlichen Vorsehen von Maschinenanbauten auftreten, wobei sich die erfindungsgemäße Vorrichtung und insbesondere ein Verlauf der durch diese geführten länglichen, flexiblen Elemente durch eine raumsparende Kompaktheit auszeichnen soll.

Die Aufgabe wird durch eine Vorrichtung gemäß Anspruch 1 gelöst.

Die erfindungsgemäße Vorrichtung stellt somit eine zusätzliche, von der Maschinenoberfläche beabstandete Befestigungsfläche für Maschinenanbauten zur Verfügung, so dass Letztere in einer gegenüber dem Stand der Technik praktisch unveränderten Position relativ zu der Maschine angeordnet werden können, ohne dass es jedoch zu einer räumlichen Konfliktsituation betreffend die Anordnung und Führung flexibler Elemente entlang der Maschine kommt.

Um weiterhin eine Orientierung der Maschinenanbauten relativ zur Maschine im wesentlichen beibehalten zu können, sieht eine Weiterbildung der erfindungsgemäßen Vorrichtung vor, dass die Befestigungsfläche im wesentlichen parallel zu der Oberfläche des Maschinenteils ausgerichtet ist.

Vorteilhafterweise weist das Formteil der erfindungsgemäßen Vorrichtung wenigstens einen ersten, an der Oberfläche des Maschinenteils anliegenden Schenkel und einen zweiten, die Befestigungsfläche bildenden Schenkel auf, wobei der erste und der zweite Schenkel über wenigstens einen zu jeweils einem der ersten und zweiten Schenkel senkrecht ausgerichteten Steg verbunden sind. Das Formteil besitzt demnach eine U-förmige Ausgestaltung, wobei das flexible Element in den Zwischenraum zwischen dem ersten und dem zweiten freien Schenkel des U gehalten und geführt ist. Dabei sind die Innenwände der Schenkel vorteilhafterweise glatt, ohne störende Vorstände ausgebildet, so dass sich das flexible Element während seiner Führung innerhalb des Formteils zumindest innerhalb des durch die Schenkel begrenzten Zwischenraums hindernisfrei bewegen kann.

Alternativ kann vorgesehen sein, dass zwei den Schenkeln entsprechende Platten durch stabförmige Abstandhalter auf Abstand gehalten sind.

In Weiterbildung der erfindungsgemäßen Vorrichtung ist vorgesehen, dass in dem Zwischenraum wenigstens zwei Halteelemente für das flexible Element angeordnet sind, die dafür sorgen, dass das flexible Element innerhalb der erfindungsgemäßen Vorrichtung eine definierte Position einnimmt. Es ist weiterhin vorzugsweise vorgesehen, dass das flexible Element durch das erste Halteelement bezüglich Bewegungen in seiner Erstreckungsrichtung und Drehungen um seine Erstreckungsrichtung fixiert gehalten ist. Erfindungsgemäß handelt es sich bei dem ersten Halteelement also um dasjenige Halteelement, bei dem das flexible Element in räumlich definierter Weise in die erfindungsgemäße Vorrichtung eintritt, beispielsweise von einer Roboterbasis kommend, wenn die erfindungsgemäße Vorrichtung im Bereich eines Roboterarms angeordnet ist.

Zur Bildung einer Längenreserve für das flexible Element, die aufgrund der relativen Beweglichkeit der Maschinenteile regelmäßig erforderlich ist, weist das flexible Element zwischen den Halteelementen in äußerst bevorzugter Weiterbildung der erfindungsgemäßen Vorrichtung einen bogenförmigen Verlauf auf, wobei ein Winkelmaß des Verlaufsbogensbogens wenigstens 90° und vorzugsweise zwischen 150° und 210° sowie höchst vorzugsweise etwa 180° beträgt. Dabei ist im Rahmen einer weiteren Ausgestaltung der erfindungsgemäßen Vorrichtung vorgesehen, dass das zweite Haltelement eine das flexible Element aufnehmende Öffnung aufweist, deren lichte Weise um ein Maß größer als ein Außendurchmesser des flexiblen Elements ist. Während das flexible Element also am ersten Halteelement fixiert gehalten ist, übernimmt die Öffnung des zweiten Halteelements lediglich eine seitliche Führungsfunktion, wobei das flexible Element bei Bewegungen von entsprechenden Maschinenteilen durch die Öffnung ausziehbar und zurückführbar ist, was ein Anpassen des flexiblen Elements an die genannten Maschinenbewegungen ermöglicht.

Eine weitere, äußerst bevorzugte Ausgestaltung der erfindungsgemäßen Vorrichtung ist gekennzeichnet durch ein in einem Bereich zwischen den Halteelementen mit dem flexiblen Element in Wirkverbindung stehendes Federmittel. Das Federmittel dient erfindungsgemäß, wie bereits vorstehend angesprochen, dazu, dass bei einer zwangsweisen Bewegung des flexiblen Elements durch die Öffnung des zweiten Halteelements hindurch das Federmittel spannbar ist und so bei Entlastung des flexiblen Elements eine Rückholbewegung desselben bewirkt. Es findet also bei einer Entlastung des flexiblen Elements aufgrund einer entsprechenden Bewegung der Maschine (Maschinenteile) eine automatische Rückholbewegung des flexiblen Elements durch die Öffnung des zweiten Halteelements in den Zwischenraum der erfindungsgemäßen Vorrichtung statt.

Bei dem Federmittel kann es sich erfindungsgemäß um eine Blattfeder handeln, die vorzugsweise parallel zu einem Verlauf des flexiblen Elements angeordnet und zusätzlich oder alternativ mit ihrem einen Ende an dem ersten Halteelement festgelegt ist. Eine alternative Ausgestaltung der erfindungsgemäßen Vorrichtung sieht vor, dass das Federmittel eine das flexible Element im wesentlichen konzentrisch umgebende Spiralfeder ist, deren Außendurchmesser größer als die lichte Weite der Öffnung des zweiten Halteelements ist. Dabei kann weiterhin an dem flexiblen Element in einem Bereich zwischen den Halteelementen ein Widerlager für die Spiralfeder vorgesehen sein, und letztere ist vorzugsweise zwischen dem Widerlager und dem zweiten Halteelement angeordnet.

Zwecks einer einfachen Befestigung der erfindungsgemäßen Vorrichtung an der betreffenden Maschine, beispielsweise einem Mehrachs-Industrieroboter, weist der erste Schenkel des Formteils vorzugsweise erste Bohrungen zum Befestigen des letzteren an der Maschine auf. Um in vorteilhafter Weise ein simultanes Befestigen sowohl der Maschinenanbauten auf der erfindungsgemäßen Befestigungsfläche und/oder an die Maschine als auch des Formteils an der Maschine zu ermöglichen, ist in äußerst bevorzugter Weiterbildung der erfindungsgemäßen Vorrichtung vorgesehen, dass der zweite Schenkel entsprechende zweite Bohrungen direkt oberhalb der ersten Bohrungen in dem ersten Schenkel aufweist. Auf diese Weise ist im Rahmen der Erfindung dafür gesorgt, dass durch übereinander liegende Paare erster und zweiter Bohrungen das Formteil an der Maschine und zugleich Maschinenbauten an dem Formteil befestigbar sind.

Wenn ein Radius des bogenförmigen Verlaufs des flexiblen Elements innerhalb der erfindungsgemäßen Vorrichtung einen doppelten Mindest-Biegeradius des flexiblen Elements unterschreitet, ist im Rahmen einer weiteren Ausgestaltung der erfindungsgemäßen Vorrichtung vorgesehen, dass das Formteil einen allseitig geschlossenen Querschnitt besitzt, wobei der Querschnitt speziell rechteckförmig sein kann. Auf diese Weise kann über die Seitenwände des geschlossenen Formteils eine seitliche Zwangskraft auf das flexible Element ausgeübt werden, so dass dieses dauerhaft einen gekrümmten Verlauf mit einem Biegeradius unterhalb des Mindest-Biegeradius annimmt, der vom Schlauchhersteller als dynamischer Mindest-Biegeradius des flexiblen Elements angegeben wird.

Alternativ wird die gestellte Aufgabe auch durch eine Vorrichtung gemäß dem unabhängigen Anspruch 23 gelöst.

Weitere Eigenschaften und Vorteile der Erfindung ergeben sich aus der nachfolgenden Beschreibung von Ausführungsbeispielen anhand der Zeichnung. Es zeigt:
- Fig. 1: eine erfindungsgemäße Vorrichtung in perspektivischer Gesamtansicht;
- Fig. 2a: die Vorrichtung der Fig. 1 in einer Darstellung ohne den oberen, zweiten Schenkel gemäß einer ersten Ausführungsform mit Spiralfeder;
- Fig. 2b: die Vorrichtung der Fig. 2a mit ausgezogenem flexiblen Element;
- Fig. 3a: eine weitere Ausgestaltung der erfindungsgemäßen Vorrichtung mit Blattfeder;
- Fig. 3b: die Vorrichtung der Fig. 3a mit ausgezogenem flexiblen Element;
- Fig. 4a-c: weitere Ausgestaltungen der erfindungsgemäßen Vorrichtung bei Variation des Biegeradius des flexiblen Elements;
- Fig. 5a: die Anordnung einer erfindungsgemäßen Vorrichtung auf einem Mehrachs-Industrieroboter; und
- Fig. 5b: eine Darstellung gemäß der Fig. 4a mit an der erfindungsgemäßen Vorrichtung befestigtem Maschinenanbau.

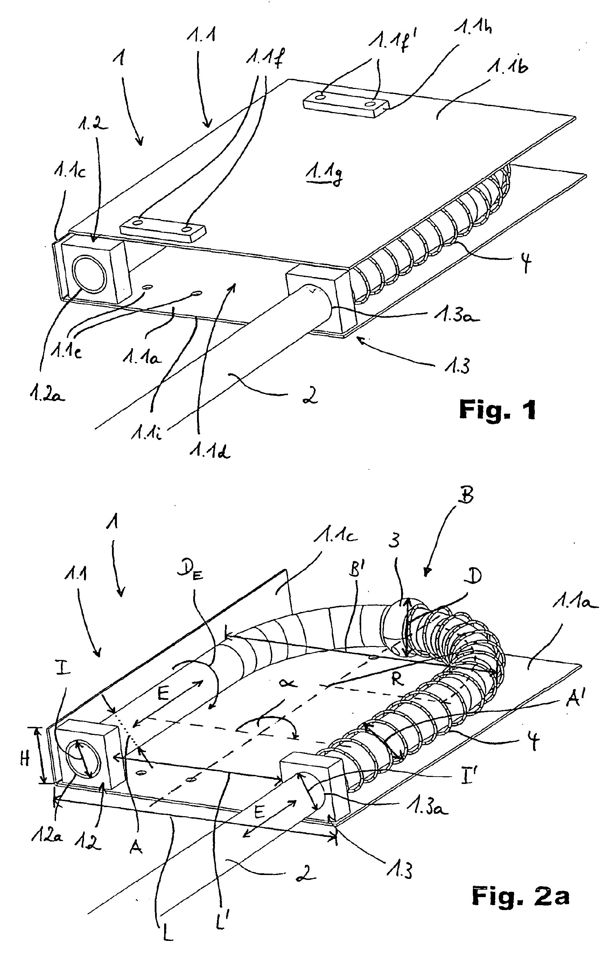

Die Figur 1 zeigt eine perspektivische Gesamtansicht einer erfindungsgemäßen Vorrichtung 1 zum Führen von länglichen flexiblen Elementen, hier eines Führungs-Schlauches 2 für die Energieversorgung eines Roboters (hier nicht gezeigt). Die Vorrichtung 1 weist zunächst ein als Blechteil ausgebildetes Formteil 1.1 auf, das gemäß der Figur 1 einen im wesentlichen U-förmigen Querschnitt besitzt und aus einem ersten Schenkel 1.1a, einem zu diesem parallelen zweiten Schenkel 1.1b sowie einem Steg 1.1c gebildet ist, wobei der Steg 1.1c senkrecht zu den Schenkeln 1.1a ausgerichtet ist. Zwischen den Schenkeln 1.1a, 1.1b des Formteils 1.1 ist durch die Höhe H des Stegs 1.1c ein Zwischenraum 1.1d definiert, in dem der Schlauch 2 zumindest teilweise angeordnet ist. Das Formteil 1.1 kann ein- oder mehrstückig ausgebildet sein.

Der erste Schenkel 1.1a des Formteils 1 weist beim gezeigten Ausführungsbeispiel Bohrungen 1.1e auf, über die das Formteil 1.1 und damit die erfindungsgemäße Vorrichtung 1 an einer Oberfläche (hier nicht gezeigt) eines Roboters befestigt werden kann. Neben den Bohrungen 1.1e sind in den zweiten Schenkel 1.1b weitere Bohrungen 1.1f, 1.1f' vorgesehen, die direkt oberhalb der Bohrungen 1.1e in dem ersten Schenkel 1.1a angeordnet sind, was aus darstellungstechnischen Gründen in Figur 1 nur für das Bohrungspaar 1.1e, 1.1f erkennbar ist. Auf diese Weise sind Maschinenanbauten (hier nicht gezeigt), die auf einer als Befestigungsfläche dienenden Oberfläche 1.1g des zweiten Schenkels 1.1b angeordnet sind, über die Bohrungspaare 1.1e, 1.1f gemeinsam mit dem Formteil 1.1 an dem Roboter befestigbar.

Zur Beabstandung der Maschinenanbauten von der Oberfläche 1.1e des zweiten Schenkels 1.1b, beispielsweise zur Schwingungsentkopplung, sind weiterhin auf der Oberfläche 1.1g im Bereich der Bohrungen 1.1f, 1.1f' Abstandselemente 1.1h vorgesehen.

Der Schlauch 2 ist an dem Formteil 1.1 durch zwei Haltelemente 1.2, 1.3 gehalten. Die Haltelemente 1.2, 1.3 sind an einer seitlichen Kante 1.1i des ersten Schenkels 1.1a in einem Abstand L' angeordnet und weisen jeweils eine Öffnung 1.2a, 1.3a zum Durchführen des Schlauchs 2 auf. Die Haltelemente 1.2, 1.3 sind weiterhin derart ausgerichtet, dass der Schlauch 2 nach Durchführung durch die Öffnung 1.2a des ersten Haltelements 1.2 in den Zwischenraum 1.1d des Formteils 1.1 einen gebogenen verlauf aufweist, wobei ein Winkelmaß α des Bogens B (vgl. Fig. 2a) beim gezeigten Ausführungsbeispiel ca. 180° beträgt, bevor der Schlauch 2 durch die Öffnung 1.3a des zweiten Haltelements 1.3 wieder aus dem Zwischenraum 1.1d des Formteils 1.1 austritt.

Der geschilderte Verlauf des Schlauchelements 2 im Inneren des Formteils 1.1 ist insbesondere der Figur 2a zu entnehmen, die eine der Figur 1 entsprechende Ansicht der erfindungsgemäßen Vorrichtung 1 zeigt, wobei jedoch der zweite, obere Schenkel 1.1b des Formteils 1.1 ausgeblendet wurde. Wie aus der Figur 2a erkennbar, beschreibt der Schlauch 2 im Inneren des Formteils 1.1 einen Bogen B mit α = 180° und einem Biegeradius R, der beim dargestellten Ausführungsbeispiel größer als ein Minimal-Biegeradius Rₘᵢₙ (nicht gezeigt) des Schlauchs 2 ist.

Der Schlauch 2 ist durch das erste Halteelement 1.2 in dessen Öffnung 1.2a bezüglich Bewegungen in seiner Erstrekkungsrichtung E und Drehungen D_{E} um eine Erstreckungsrichtung E (vergleiche Pfeile in Fig. 2a) fixiert gehalten. Dies wird erfindungsgemäß dadurch erreicht, dass ein Innendurchmesser I der Öffnung 1.2a des ersten Halteelements 1.2 kleiner als ein Außendurchmesser A des Schlauch 2 vor dem Einbringen in die Öffnung 1.2a ist.

Demgegenüber weist das zweite Halteelement 1.3 eine den Schlauch 2 aufnehmende Öffnung 1.3a auf, deren lichte Weite (Innendurchmesser I') größer als der Außendurchmesser A des Schlauchs 2 ist, so dass der Schlauch 2 sich zumindest in seiner Erstreckungsrichtung E im wesentlichen frei durch die Öffnung 1.3a des zweiten Halteelements 1.3 bewegen kann.

Um das Schlauch 2 herum ist zwischen einer im Bereich des Bogens B angeordneten, ringförmigen Manschette 3 und dem zweiten Halteelement 1.3 eine den Schlauch 2 konzentrisch umgebende Spiralfeder 4 angeordnet, wobei die Ringmanschette 3 und das Halteelement 1.3 jeweils als Widerlager für die Schraubenfeder 4 dienen. Zu diesem Zweck weist die Spiralfeder 4 einen Außendurchmesser A' auf, der größer als der Innendurchmesser I' in der Öffnung 1.3a des zweiten Halteelements 1.3 ist.

Weiterhin ist bei der gezeigten Ausgestaltung der Vorrichtung 1 eine Länge L der ersten 1.1a und zweiten Schenkel 1.1b des Formteils 1.1 so gewählt, dass sie zumindest einer entsprechenden Biegebreite B' des Schlauchbogens B entspricht, B' = 2 · R + (A' + A)/2 (vergleiche Fig. 2a), oder B' = 2 · R + (D + A)/2, für D > A', wobei D einen Durchmesser der Manschette 3 bezeichnet. Entsprechend beträgt eine Höhe H des Stegs 1.1c wenigstens H = A' bzw. H = D, damit freie Beweglichkeit des Schlauchs 2 innerhalb des Formteils gegeben ist.

In der Figur 2a ist die Schraubenfeder 4 in ihrem unausgelenkten Ruhezustand gezeigt, d.h. sie ist ungespannt. Gemäß der gezeigten Ausgestaltung der erfindungsgemäßen Vorrichtung ist die Spiralfeder 4 bei einer zwangsweisen Bewegung des Schlauchs 2 durch die Öffnung 1.3a des zweiten Halteelements 1.3 hindurch, beispielsweise aufgrund einer auf den Schlauch einwirkenden Zugkraft bei Bewegung des Roboters, spannbar (zusammenziehbar), so dass bei einer Entlastung des Schlauchs 2 eine auf die Ringmanschette 3 wirkende Rückstellkraft bewirkt ist, was zu einer Rückholbewegung des Schlauchs 2 durch die Öffnung 1.3a des zweiten Halteelements 1.3 führt.

Somit fungiert der in dem Innenraum 1.3b des erfindungsgemäßen Formteils 1.1 angeordnete Abschnitt des Schlauchs 2 als Längenreserve für den Schlauch 2 bei Bewegungen des Roboters.

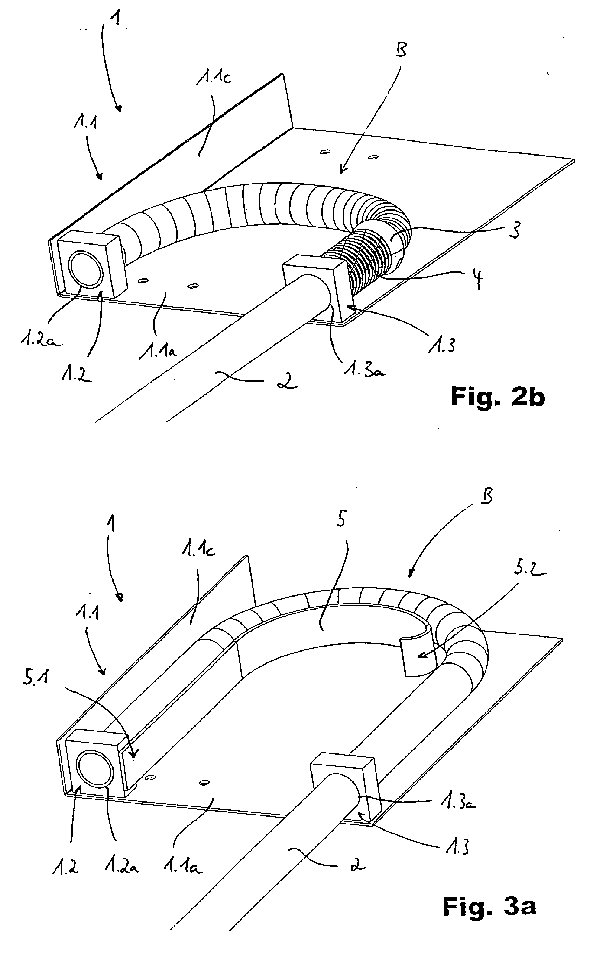

Die Figur 2b zeigt in einer der Figur 2a entsprechenden Darstellung den vorstehend bereits geschilderten, ausgezogenen Zustand des Schlauchs 2. Die Spiralfeder 4 ist gemäß der Figur 2b maximal gestaucht, so dass ein weiteres Ausziehen des Schlauchs 2 aus dem Innenraum 1.1d des Formteils 1.1 nicht mehr möglich ist. Bei Belastung des Schlauchs 2 bewegt sich dieses aufgrund der durch die Spiralfeder vermittelten Rückstellkraft in die in der Figur 2a gezeigte Ausgangsstellung zurück.

Die Figur 3a zeigt eine alternative Ausgestaltung der erfindungsgemäßen Vorrichtung 1, bei der als Federmittel anstelle der Spiralfeder 4 (Figuren 1-2b) eine Blattfeder 5 zum Einsatz kommt. Die Blattfeder 5 ist im wesentlichen parallel zu einem Verlauf des Schlauchs 2 angeordnet und mit ihrem ersten Ende 5.1 an dem ersten Halteelement 1.2 befestigt, beispielsweise angeschweißt, angenietet oder angeschraubt. An ihrem freien Ende 5.2 weist die Blattfeder 5 eine Einwärtskrümmung auf, um den Schlauch 2 nicht durch Berührung zu schädigen.

Die Blattfeder 5 erfüllt im Rahmen der vorliegenden Erfindung denselben Zweck wie die vorstehend detailliert beschriebene Spiralfeder 4; dabei zeigt die Figur 3a den Ruhezustand (nicht deformierten Zustand) der Blattfeder 5.

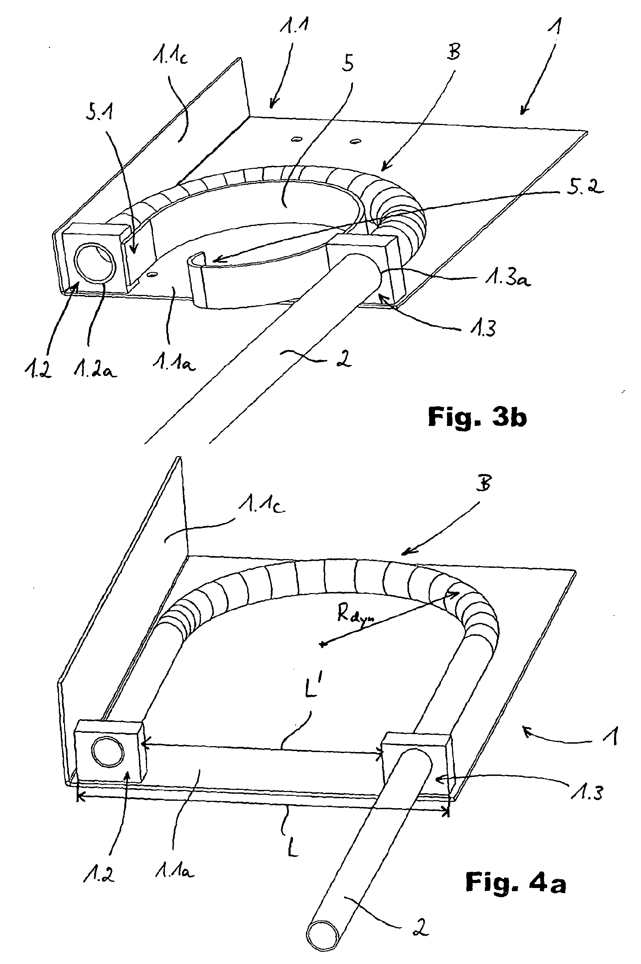

In Figur 3b ist entsprechend der Darstellung in Figur 2b der Zustand dargestellt, der sich ergibt, wenn der Schlauch 2 aus dem Innenraum 1.1d des Formteils 1.1 herausgezogen wird, wiederum z.B. durch eine Bewegung des Roboters. Bei Entlastung des Schlauchelements 2 übt die Blattfeder 5 eine Rückstellkraft auf das Schlauchelement 2 aus, wodurch dieses in die in der Figur 3a gezeigte Ausgangsstellung zurückbewegt wird.

Gemäß einer nicht gezeigten, alternativen Ausgestaltung der erfindungsgemäßen Vorrichtung 1 kann das Formteil 1.1 einen weiteren, vorzugsweise parallel zu dem Steg 1.1c ausgerichteten, weiteren Schenkel (nicht gezeigt) aufweisen, so dass sich für das Formteil 1.1 eine im Querschnitt rechteckig geschlossene Form ergibt. Eine solche Ausgestaltung ist insbesondere dann von Vorteil, wenn aufgrund einer entsprechenden Abmessung L der ersten 1.1a und zweiten Schenkel 1.1b bzw. eines korrespondierenden Abstands L' der Halteelemente 1.2, 1.3 ein Biegeradius R für den Schlauch 2 ergibt, der kleiner ist als der durch Materialparameter des Schlauchs 2 vorgegebene dynamische Mindest-Biegeradius R_{dyn}. In diesem Fall verhindert der vierte Schenkel des Formteils 1.1 zusammen mit der Basis 1.1c ein durch die Unterschreitung des Mindest-Biegeradius bedingtes seitliches Ausbrechen des Schlauchs 2.

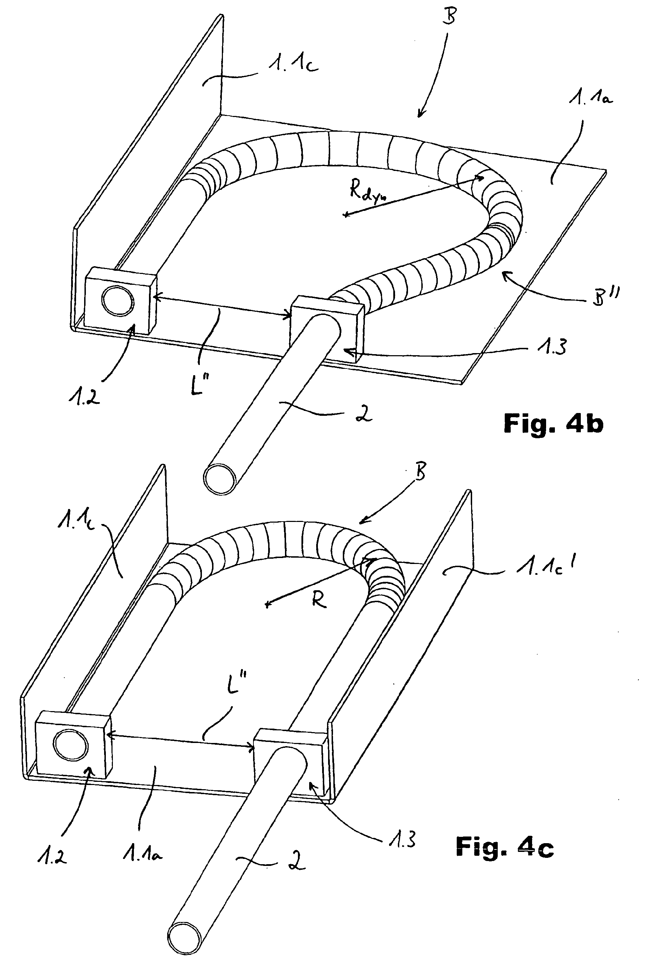

Dies ist nachfolgend in den Figuren 4a-c dargestellt: Die Fig. 4a zeigt eine gattungsgemäße Vorrichtung 1, bei der der Abstand L' der Halteelemente 1.2, 1.3 derart gewählt ist, dass sich der Schlauch 2 im Bereich des Bogens B gerade mit dem vorgegebenen dynamischen Mindest-Biegeradius R_{dyn} krümmt. Wenn nun, wie in der nachfolgenden Fig. 4b dargestellt, der Abstand L'' zwischen den Halteelementen 1.2, 1.3 verringert wird, beispielsweise aus Platzgründen, würde der Schlauch 2 dazu neigen, den o.g. Radius R_{dyn} trotzdem beizubehalten; dies würde im Bereich B'' zu einer Ausbeulung des Schlauchs 2 führen. Um hier Abhilfe zu schaffen, wird erfindungsgemäß, wie in Fig. 4c dargestellt, ein weiterer Steg 1.1c' mit Stützfunktion für den Schlauch 2 eingeführt, der den Schlauch 2 zusammendrückt, so dass ein kleinerer Biegeradius R als der vorgegebenen dynamische Mindest-Biegeradius R_{dyn} erreichbar ist.

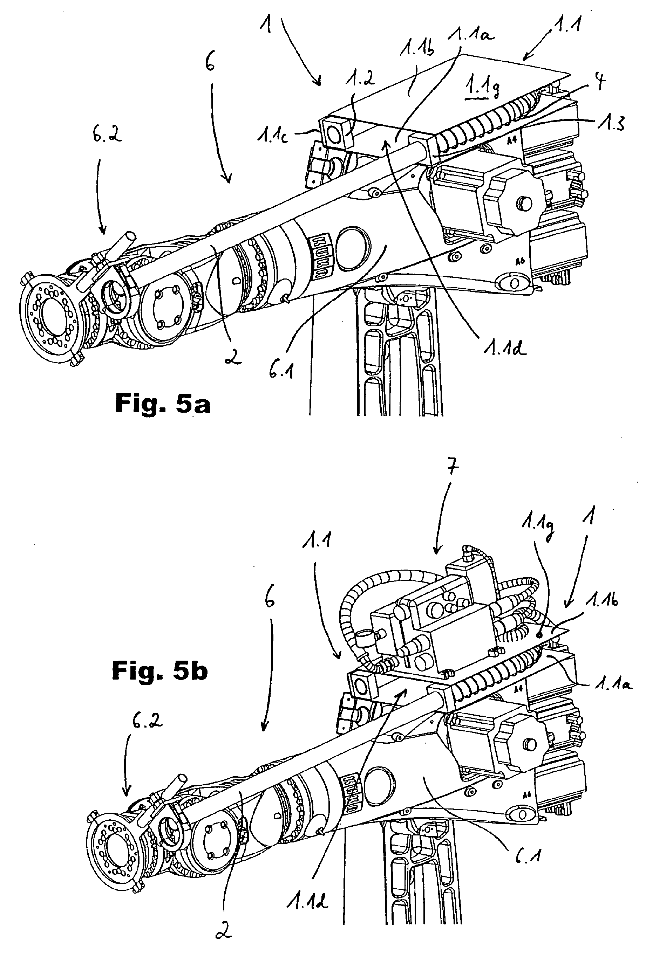

Die Fig. 5a zeigt die Anordnung einer erfindungsgemäßen Vorrichtung 1 im Bereich der A3-Achse eines Mehrachs-Industrieroboters 6. Dabei ist das Formteil 1.1 auf einer Oberfläche (nicht erkennbar) im hinteren Bereich des Roboterarms 6.1 angeordnet. Das Schlauchelement 2 ist nach vorne in den Bereich der Roboterhand 6.2 geführt und dient dort in herkömmlicher Weise zur Energieversorgung eines mit der Roboterhand 6.2 verbundenen, nicht gezeigten Werkzeugs.

Die Fig. 5b zeigt schließlich in einer im wesentlichen der Fig. 5a entsprechenden Darstellung einen mit der erfindungsgemäßen Vorrichtung 1 ausgestatteten Roboter 6, bei dem auf der Oberfläche 1.1g des zweiten Schenkels 1.1b, die erfindungsgemäß als Befestigungsfläche dient, Maschinenanbauten in Form eines Proportional-Steuerventils 7 zur Druckluftsteuerung angeordnet sind. Wie der Fig. 5b entnehmbar ist, kommt es bei Verwendung der erfindungsgemäßen Vorrichtung 1 zu keinerlei räumlicher Konkurrenz zwischen dem Schlauchmittel 2 zur Energierversorgung des Roboterwerkzeugs und den Maschinenanbauten 7 aufgrund der geschichteten Anordnung im Bereich der erfindungsgemäßen Vorrichtung 1, obwohl die Energiezuführung und die Anbauten 7 bezogen auf den Roboter 6 prinzipiell denselben Bauraum beanspruchen.

### Bezugszeichenliste

- 1: Vorrichtung
- 1.1: Formteil
- 1.1a: erster Schenkel
- 1.1b: zweiter Schenkel
- 1.1c, 1.1c': Steg
- 1.1d: Zwischenraum
- 1.1e, 1.1f, 1.1f': Bohrung
- 1.1g: Oberfläche
- 1.1h: Abstandselement
- 1.1i: Kante
- 1.2, 1.3: Halteelement
- 1.2a, 1.3a: Öffnung
- 2: Schlauch
- 3: Manschette
- 4: Schraubenfeder
- 5: Blattfeder
- 5.1, 5.1: Ende
- 6: Roboter
- 6.1: Roboterarm
- 6.2: Roboterhand
- 7: Maschinenanbauten
- A, A': Außendurchmesser
- B: Bogen
- B': Biegebreite
- B": Ausbeulung
- D: Durchmesser
- D_{E}: Drehrichtung
- E: Erstreckungsrichtung
- H: Höhe
- I: Innendurchmesser
- I': Innendurchmesser
- L: Länge
- L', L ": Abstand
- R: Biegeradius
- Rₘᵢₙ: Mindest-Biegeradius
- R_{dyn}: dynamischer Biegeradius
- α: Winkelmaß

## Patentansprüche

1. Vorrichtung zum Führen von Energieversorgungskabeln entlang Achsen eines Mehrachs-Industrieroboters, wobei ein Formteil (1.1) zum Schaffen einer von einer Oberfläche des Maschinenteils (6.1) beabstandeten Befestigungsfläche (1.1g) für Maschinenanbauten (7) an einem Maschinenteil (6.1) angeordnet ist, wobei das Formteil (1.1) wenigstens einen ersten, an der Oberfläche des Maschinenteils (6.1) anliegenden Schenkel (1.1a) und einen zweiten, die Befestigungsfläche (1.1g) bildenden Schenkel (1.1b) aufweist und wobei wenigstens ein Energieversorgungskabel (2) in einem zwischen den beiden Schenkeln (1.1a, 1.1b) des Formteils (1.1) definierten Zwischenraum (1.1d) zwischen der Oberfläche und der Befestigungsfläche (1.1g) gehalten und geführt ist.

2. Vorrichtung nach Anspruch 1, **dadurch gekennzeichnet, dass** die Befestigungsfläche (1.1g) im Wesentlichen parallel zu der Oberfläche des Maschinenteils (6.1) ausgerichtet ist.

3. Vorrichtung nach Anspruch 1 oder 2, **dadurch gekennzeichnet, dass** der erste (1.1a) und der zweite Schenkel (1.1b) über wenigstens einen zu jeweils einem der ersten und zweiten Schenkel (1.1a, 1.1b) senkrecht ausgerichteten Steg (1.1c) verbunden sind.

4. Vorrichtung nach einem der Ansprüche 1 bis 3, **dadurch gekennzeichnet, dass** in dem Zwischenraum (1.1d) wenigstens zwei Halteelemente (1.2, 1.3) für das Energieversorgungskabel (2) angeordnet sind.

5. Vorrichtung nach Anspruch 4, **dadurch gekennzeichnet, dass** das Energieversorgungskabel (2) durch das erste Halteelement (1.2) bezüglich Bewegungen in seiner Erstreckungsrichtung (E) und Drehungen (D_{E}) um seine Erstreckungsrichtung (E) fixiert gehalten ist.

6. Vorrichtung nach Anspruch 4 oder 5, **dadurch gekennzeichnet, dass** das Energieversorgungskabel (2) zwischen den Halteelementen (1.2, 1.3) einen bogenförmigen Verlauf (B) aufweist.

7. Vorrichtung nach Anspruch 6, **dadurch gekennzeichnet, dass** ein Winkelmaß (α) des Verlaufsbogens (B) wenigstens 90° beträgt.

8. Vorrichtung nach Anspruch 6 oder 7, **dadurch gekennzeichnet, dass** ein Winkelmaß (α) des Verlaufsbogens (B) etwa 180° beträgt.

9. Vorrichtung nach einem der Ansprüche 4 bis 8, **dadurch gekennzeichnet, dass** das zweite Halteelement (1.3) eine das Energieversorgungskabel (2) aufnehmende Öffnung (1.3a) aufweist, deren lichte Weite (I') um ein Maß größer als ein Außendurchmesser (A) des Energieversorgungskabels (2) ist.

10. Vorrichtung nach einem der Ansprüche 4 bis 9, **gekennzeichnet durch** ein in einem Bereich zwischen den Halteelementen (1.2, 1.3) mit dem Energieversorgungskabel (2) in Wirkverbindung stehendes Federmittel (4, 5).

11. Vorrichtung nach den Ansprüchen 9 und 10, **dadurch gekennzeichnet, dass** bei einer zwangsweisen Bewegung Energieversorgungskabels (2) durch die Öffnung (1.3a) des zweiten Halteelements (1.3) hindurch das Federmittel (4, 5) spannbar und so bei Entlastung des Energieversörgungskabels (2) eine Rückholbewegung desselben bewirkt ist.

12. Vorrichtung nach Anspruch 10 oder 11, **dadurch gekennzeichnet, dass** das Federmittel eine Blattfeder (5) ist.

13. Vorrichtung nach Anspruch 12, **dadurch gekennzeichnet, dass** die Blattfeder (5) im wesentlich parallel zu einem Verlauf des Energieversorgungskabel (2) angeordnet ist.

14. Vorrichtung nach Anspruch 12 oder 13, **dadurch gekennzeichnet, dass** die Blattfeder (5) mit ihrem einen Ende (5.1) an dem ersten Halteelement (1.2) festgelegt ist.

15. Vorrichtung nach den Ansprüchen 9 und 10, **dadurch gekennzeichnet, dass** das Federmittel eine das Energieversorgungskabel (2) im Wesentlichen konzentrisch umgebende Spiralfeder (4) ist, deren Außendurchmesser (A') größer als die lichte Weite (I') der Öffnung (1.3a) des zweiten Halteelements (1.3) ist.

16. Vorrichtung nach Anspruch 15, **dadurch gekennzeichnet, dass** an dem Energieversorgungskabel (2) in einem Bereich zwischen den Halteelementen (1.2, 1.3) ein Widerlager (3) für die Spiralfeder (4) vorgesehen ist.

17. Vorrichtung nach Anspruch 16, **dadurch gekennzeichnet, dass** die Spiralfeder (4) zwischen dem Widerlager (3) und dem zweiten Halteelement (1.3) angeordnet ist.

18. Vorrichtung nach einem der Ansprüche 3 bis 17, **dadurch gekennzeichnet, dass** der erste Schenkel (1.1a) erste Bohrungen (1.1e) zum Befestigen des Formteils (1.1) an der Maschine (6) aufweist.

19. Vorrichtung nach Anspruch 18, **dadurch gekennzeichnet, dass** der zweite Schenkel (1.1b) entsprechende zweite Bohrungen (1.1f, 1.1f') direkt oberhalb der ersten Bohrungen (1.1e) in dem ersten Schenkel (1.1a) aufweist.

20. Vorrichtung nach Anspruch 19, **dadurch gekennzeichnet, dass** durch übereinander liegende Paare erster (1.1e) und zweiter Bohrungen (1.1f, 1.1f') das Formteil (1.1) an der Maschine (6) und zugleich Maschinenanbauten (7) an dem Formteil (1.1) und/oder an der Maschine (6) befestigbar sind.

21. Vorrichtung nach einem der Ansprüche 1 bis 20, **dadurch gekennzeichnet, dass** das Formteil (1.1) einen allseitig geschlossenen Querschnitt besitzt.

22. Vorrichtung nach Anspruch 21, **dadurch gekennzeichnet, dass** der Querschnitt rechteckförmig ist.

23. Vorrichtung zum Führen von Energieversorgungskabeln entlang Achsen eines Mehrachs-Industrieroboters, insbesondere nach einem der vorangehenden Ansprüche, wobei die Energieleiter zwischen voneinander beabstandeten, zur Befestigung von Maschinenanbauten geeigneten Befestigungsflächen geführt sind und wobei die Energieleiter ein festes Ende an einem festen Maschinenteil und ein längsbewegliches Ende an einem längsbeweglichen Maschinenteil aufweisen und zwischen den Energieleiterenden zumindest bereichsweise eine Federeinrichtung wirkt, die gegen die Vergrößerung der Entfernung der beiden Energieleiterenden gerichtet ist.

## Claims

1. Device for carrying power supply cables along axles of a multi-axle industrial robot, where a shaped part (1.1) is positioned to create a mounting surface (1.1g) for machine components (7) to a machine part (6.1) spaced from a surface of the machine part (6.1), where the shaped part (1.1) has at least a first leg (1.1a) adjacent to the surface of the machine part (6.1) and a second leg (1.1b) forming the mounting surface (1.1g) and where at least one power supply cable (2) is held and carried in a spacing (1.1d) between the surface and the mounting surface (1.1g) defined by the two legs (1.1a, 1.1b) of the shaped part (1.1).

2. Device according to claim 1, **characterized in that** the mounting surface (1.1g) is positioned substantially parallel to the surface of the machine part (6.1).

3. Device according to claim 1 or 2, **characterized in that** the first (1.1a) and the second leg (1.1b) are connected by at least one bridge (1.1c) positioned perpendicular to a respective first and second leg (1.1a, 1.1b).

4. Device according to claim 1 to 3, **characterized in that** at least 2 fixation elements (1.2, 1.3) for the power supply cable (2) are positioned in the spacing (1.1d).

5. Device according to claim 4, **characterized in that** the power supply cable (2) is held fixed by the first fixation element (1.2) regarding its direction of extension (E) and rotation (D_{E}) around its direction of extension (E).

6. Device according to claim 4 or 5, **characterized in that** the power supply cable (2) shows a arch-like course (B) between the fixation elements (1.2, 1.3).

7. Device according to claim 6, **characterized in that** an angle (α) in the course of the arch (B) is at least 90°.

8. Device according to claim 6 or 7, **characterized in that** an angle (α) in the course of the arch (B) is approximately 180°.

9. Device according to one of the claims 4 to 8, **characterized in that** the second fixation element (1.3) has an opening (1.3a) holding the power supply cable (2), which has an inside diameter (I') being larger than an outside diameter (A) of the power supply cable (2).

10. Device according to one of the claims 4 to 9, **characterized by** a spring means (4, 5) in an area between the fixation elements (1.2, 1.3) and working on the power supply cable (2).

11. Device according to claims 9 an 10, **characterized in that** upon a forceful movement of the power supply cable (2) through the opening (1.3a) of the second fixation element (1.3), the spring means (4,5) is tensile, and causes a return movement of the same power supply cable (2) when the tension on it is relieved.

12. Device according to claim 10 or 11, **characterized in that** the spring means is a leaf spring (5).

13. Device according to claim 12, **characterized in that** the leaf spring (5) is positioned substantially parallel to a course of the power supply cable (2).

14. Device according to claim 12 or 13, **characterized in that** the leaf spring (5) is fixed with its one end (5.1) to the first fixation element (1.2).

15. Device according to claims 9 or 10, **characterized in that** the spring means is a spiral spring (4), that substantially encloses the power supply cable (2) concentrically, where its outside diameter (A') is larger than the inside diameter (I') of the opening (1.3) of the second fixation element (1.3).

16. Device according to claim 15, **characterized in that** at the power supply cable (2) the spiral spring (4) is provided with an abutment (3) in an area between the fixation elements (1.2, 1.3).

17. Device according to claim 16, **characterized in that** the spiral spring (4) is positioned between the abutment (3) and the second fixation element (1.3).

18. Device according to one of the claims 13 to 17, **characterized in that** the first leg (1.1a) has first boreholes (1.1e) for attaching the moulded part (1.1) to the machine (6).

19. Device according to claim 18, **characterized in that** the second leg (1.1b) has corresponding second boreholes (1.1f, 1.1') directly above the first boreholes (1.1e) on the first leg (1.1a).

20. Device according to claim 19, **characterized in that** the shaped part (1.1) is attachable to the machine (6) and simultaneously machine components (7) to the shaped part (1.1) and/or the machine (6) by pairs of first (1.1e) and second (1.1f, 1.1f') boreholes located above each other.

21. Device according to one of the claims 1 to 20, in that the shaped part (1.1) has an allenclosed profile.

22. Device according to claim 21, **characterized in that** the profile is rectangular.

23. Device for carrying power supply cables along axles of a multi-axle industrial robot, particularly according to one of the foregoing claims, where the feeder cables are carried between spaced mounting surfaces, suitable for mounting machine components, and where the feeder cables have a fixed end at a fixes machine part and a longitudinally movable end at a longitudinally movable machine part, and between the ends of the feeder cable a spring means works at least in parts against enlarging the distance of both feeder cable ends.

## Revendications

1. Dispositif pour guider des câbles d'alimentation en énergie le long des axes d'un robot industriel à axes multiples, dans lequel une pièce usinée (1.1) est placée sur une partie de la machine (6.1) afin de créer pour des pièces rapportées (7) une aire de fixation (1.1g) distante d'une surface de la partie de la machine (6.1), la pièce usinée (1.1) présentant au moins une première branche (1,1 a) adjacente à la surface de la partie de la machine (6.1) et une deuxième branche (1.1b) formant l'aire de fixation (1.1g) et dans lequel au moins un câble d'alimentation en énergie (2) est retenu et guidé entre la surface et l'aire de fixation (1.1g) dans un espace (1.1 d) défini entre les deux branches (1.1a, 1.1 b) de la pièce usinée (1.1).

2. Dispositif selon la revendication 1, **caractérisé en ce que** l'aire de fixation (1.1g) est essentiellement parallèle à la surface de la partie de la machine (6.1).

3. Dispositif selon la revendication 1 ou 2, **caractérisé en ce que** la première branche (1.1a) et la deuxième branche (1.1 b) sont reliées par une entretoise (1.1c) perpendiculaire respectivement à la première et à la deuxième branche (1.1 a, 1.1 b) .

4. Dispositif selon une des revendications 1 à 3, **caractérisé en ce que** dans l'espace (1.1d) au moins deux éléments de maintien (1.2, 1.3) sont disposés pour le câble d'alimentation en énergie (2).

5. Dispositif selon la revendication 4, **caractérisé en ce que** le câble d'alimentation en énergie (2) est maintenu fixé par le premier élément de maintien (1.2) par rapport aux mouvements dans le sens de son déploiement (E) et aux rotations (D_{E}) autour du sens de son déploiement (E).

6. Dispositif selon la revendication 4 ou 5, **caractérisé en ce que** le câble d'alimentation en énergie (2) présente entre les éléments de maintien (1.2, 1.3) un tracé cintré (B).

7. Dispositif selon la revendication 6, **caractérisé en ce qu'**un mesurage angulaire (±) du tracé cintré (B) soit égal à au moins 90°.

8. Dispositif selon la revendication 6 ou 7, **caractérisé en ce qu'**un mesurage angulaire (±) du tracé cintré (B) soit égal à au moins 180°.

9. Dispositif selon une des revendications 4 à 8, **caractérisé en ce que** le deuxième élément de maintien (1.3) présente une ouverture (1.3a) accueillant le câble d'alimentation en énergie (2), ouverture dont la largeur intérieure (l') est supérieure d'une mesure à un diamètre extérieur (A) du câble d'alimentation en énergie (2).

10. Dispositif selon une des revendications 4 à 9, **caractérisé par** un organe élastique (4, 5) en liaison active avec le câble d'alimentation en énergie (2) dans une zone entre les éléments de maintien (1.2, 1.3).

11. Dispositif selon les revendications 9 et 10, **caractérisé en ce que** lors d'un mouvement forcé du câble d'alimentation en énergie (2) à travers l'ouverture (1.3a) du deuxième élément de maintien (1.3) l'organe élastique (4, 5) se tende et de cette manière provoque lors du délestage du câble d'alimentation en énergie (2) un mouvement de rappel de ce dernier.

12. Dispositif selon la revendication 10 ou 11, **caractérisé en ce que** l'organe élastique est constitué par un ressort à lames (5).

13. Dispositif selon la revendication 12, **caractérisé en ce que** les ressorts à lames (5) sont disposés de manière essentiellement parallèle à un tracé du câble d'alimentation en énergie (2).

14. Dispositif selon la revendication 12 ou 13, **caractérisé en ce que** les ressorts à lames (5) sont solidaires par une de leurs extrémités (5.1) du premier élément de maintien (1.2).

15. Dispositif selon les revendications 9 et 10, **caractérisé en ce que** l'organe élastique est un ressort hélicoïdal (4) entourant le câble d'alimentation en énergie (2) de manière essentiellement concentrique, ressort dont le diamètre extérieur (A') est supérieur à la largeur intérieure (I') de l'ouverture (1.3a) du deuxième élément de maintien (1.3).

16. Dispositif selon la revendication 15, **caractérisé en ce que** près du câble d'alimentation en énergie (2) un aboutement (3) est prévu pour le ressort hélicoïdal (4) dans une zone comprise entre les éléments de maintien (1.2, 1.3).

17. Dispositif selon la revendication 16, **caractérisé en ce que** le ressort hélicoïdal (4) est placé entre l'aboutement (3) et le deuxième élément de maintien (1.3).

18. Dispositif selon une des revendications 3 à 17, **caractérisé en ce que** la première branche (1.1a) présente de premiers orifices (1.1e) pour y fixer la pièce usinée (1.1) sur la machine (6).

19. Dispositif selon la revendication 18, **caractérisé en ce que** la deuxième branche (1.1b) présente une deuxièmes série d'orifices (1.1f, 1.1f) juste au-dessus des premiers orifices (1.1e) dans la première branche (1.1 a).

20. Dispositif selon la revendication 19, **caractérisé par le fait que** grâce aux couples superposés des premiers (1.1e) et des deuxièmes orifices (1.1f, 1.1f) la pièce usinée (1.1) peut être fixée à la machine (6) et simultanément les pièces rapportées (7) à la pièce usinée (1.1) et/ou à la machine (6).

21. Dispositif selon l'une des revendications 1 à 20, **caractérisé en ce que** la pièce usinée (1.1) possède une section fermée de toute part.

22. Dispositif selon la revendication 21, **caractérisé en ce que** la section est rectangulaire.

23. Dispositif pour guider des câbles d'alimentation en énergie le long des axes d'un robot industriel à axes multiples, notamment selon l'une des revendications précédentes, dans lequel les conducteurs d'énergie sont guidés entre des aires de fixation espacées l'une de l'autre et convenant pour fixer des pièces rapportées et dans lequel les conducteurs d'énergie présentent une extrémité fixe sur une partie fixe de la machine et une extrémité mobile longitudinalement sur une partie de la machine mobile longitudinalement et dans lequel entre les extrémités des conducteurs d'énergie un dispositif élastique exerce son action au moins par zone en étant axé contre l'agrandissement de la distance des deux extrémités des conducteurs d'énergie.
